(19) Europäisches Patentamt
European Patent Office
Office européen des brevets

(11) **EP 4 687 001 A1**

(12) **EUROPEAN PATENT APPLICATION**

(43) Date of publication:
**04.02.2026 Bulletin 2026/06**

(21) Application number: 24192304.4

(22) Date of filing: **01.08.2024**

(51) International Patent Classification (IPC):
**G05D 23/19** (2006.01)     **G05F 3/30** (2006.01)

(52) Cooperative Patent Classification (CPC):
**G05D 23/1909; G05F 3/30;** G05F 3/22; G05F 3/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Fraunhofer-Gesellschaft zur
Förderung
der angewandten Forschung e.V.
80686 München (DE)**

(72) Inventor: **Eberlein, Matthias
80686 München (DE)**

(74) Representative: **Epping - Hermann - Fischer
Patentanwaltsgesellschaft mbH
Schloßschmidstraße 5
80639 München (DE)**

(54) **VOLTAGE REFERENCE CIRCUIT, INTEGRATED CIRCUIT, AND METHOD FOR GENERATING A REFERENCE VOLTAGE**

(57)     A voltage reference circuit (10) comprises one or more circuit components (D1, D2, Q1, Q2) configured to generate a first voltage (V1) and a second voltage (V2), wherein the first voltage has a first temperature coefficient, and the second voltage has a second temperature coefficient that is different from the first temperature coefficient. An adjustment circuit (12) is configured to generate an adjusted voltage (Vx) as product of the first voltage and an adjustment factor (x), wherein the adjusted voltage is designed to equal the second voltage in equilibrium at a target temperature (T0). A control device (14) is configured to provide a control signal (CV) based on a difference between the adjusted voltage and the second voltage. A heater device (16) is configured to generate heat (H) in response to being controlled by the control signal, wherein the heater device is thermally coupled to the one or more circuit components, thus forming a feedback loop for establishing the equilibrium at the target temperature. An output terminal (18) is configured to provide a reference voltage (Vref) as function of the first voltage or the second voltage.

Fig. 1

## Description

The present application relates to a voltage reference circuit, an integrated circuit, and a method for generating a reference voltage.

Voltage reference circuits are essential blocks in any integrated circuit, IC. For example, they are required for accurate biasing, sensing, analog-to-digital converters (ADCs), digital-to-analog-converters (DACs), memory element or the like. With aggressive technology scaling it gets challenging to use traditional concepts like bandgap references. For example, the supply voltage available in-system is too low (e.g., smaller than 0.9V) and hence not sufficient to bias a bipolar junction transistor, BJT, device. Further, the increased manufacturing spread of the device properties results in reduced precision, specifically with respect to temperature variations.

Applications with low supply voltage, in particular below the native bandgap voltage of about 1.25V, may use known current-mode bandgap reference circuits. Such voltage reference circuits may use an open-loop architecture, in which the reference voltage output is outside a feedback loop. In this case, the operation of the voltage reference circuit is not compensating for changes in the output of the voltage reference circuit. Without such adjustments, open-loop voltage reference circuits are highly sensitive to power supply noise, device noise, leakage currents at the output, and circuit element mismatch, making high precision and high performance difficult to achieve. In addition, such circuits may not or only hardly be able to operate at a supply voltage of under 1.0V (VDD < 1.0V).

At least one object of particular embodiments is to provide an improved voltage reference circuit.

According to at least one embodiment, a voltage reference circuit is provided.

The voltage reference circuit can be incorporated in an integrated circuit. For example, the voltage reference circuit outputs a voltage reference for other circuit components of the integrated circuit. The voltage reference circuit can be implemented in CMOS technology.

According to at least one embodiment, the voltage reference circuit comprises one or more circuit components configured to generate a first voltage and a second voltage.

In an example, the voltage reference circuit comprises two circuit components, wherein a first circuit component of the two circuit components is configured to generate the first voltage, and wherein a second circuit component of the two circuit components is configured to generate the second voltage. In another example, as further explained below, the voltage reference circuit comprises a single circuit component that is configured to generate both the first and the second voltage. It is also possible that the first voltage is generated by a first group of circuit components and that the second voltage is generated by a second group of circuit components. That the first and the second voltage are generated by the respective circuit components can mean that a voltage drop across the one or more circuit components serves as first and second voltage, respectively. For example, the one or more circuit components comprise diodes and/or transistors, and the first and the second voltage are forward voltage drops across the respective devices.

According to at least one embodiment, the first voltage has a first temperature coefficient, and the second voltage has a second temperature coefficient, wherein the first temperature coefficient and the second temperature coefficient are different.

The temperature coefficient is a measure that describes how a particular parameter - in this case the voltage - changes with temperature. For instance, for semiconductor devices like diodes and transistors, the temperature coefficient can describe changes in forward voltage drop with temperature. A positive temperature coefficient, PTC, indicates that the parameter increases with an increase in temperature. For example, the resistance of most metals increases with temperature. A negative temperature coefficient, NTC, indicates that the parameter decreases with an increase in temperature. For example, the resistance of most semiconductors and thermistors decreases with temperature. The first and/or the second temperature coefficient can be negative or positive. Preferable, the temperature coefficients of the first voltage and of the second voltage are both negative, wherein the voltages show an approximately linear dependence on temperature.

According to at least one embodiment, the voltage reference circuit further comprises an adjustment circuit that is configured to generate an adjusted voltage as product of the first voltage and an adjustment factor. The adjusted voltage is designed to equal the second voltage in equilibrium at a target temperature.

In other words, the adjusted voltage is a scaled version of the first voltage. The adjustment factor is selected to achieve the equilibrium condition $x \cdot V1 = V2$ at the target temperature, wherein x is the adjustment factor, V1 is the first voltage, and V2 is the second voltage. As long as the target temperature is not established, the second voltage differs from the adjusted voltage. For example, the adjustment circuit is implemented as voltage divider or as amplifier.

According to at least one embodiment, the voltage reference circuit further comprises a control device. The control device is configured to provide a control signal based on a difference between the adjusted voltage and the second voltage.

For example, the control device is implemented as differential amplifier or as comparator. The control device comprises a first input for receiving the adjusted voltage and a second input of receiving the second voltage. The control signal is provided at an output of the control device. The control signal is a voltage or a current, for example. The control device may generate the control signal as function of the difference between the adjusted voltage and the second voltage, e.g., by amplifying the difference between the adjusted voltage and the second voltage.

According to at least one embodiment, the voltage reference circuit further comprises a heater device. The heater device is configured to generate heat in response to being controlled by the control signal.

For example, the heater device is driven by the control signal. The greater the control signal, the more heat can be generated by the heater. The heater device can be a resistive heater and may be constructed from various materials available, for example polysilicon, metal etc.

According to at least one embodiment, the heater device is thermally coupled to the one or more circuit components that generate the first and the second voltage. Thus, a feedback loop is formed for establishing the equilibrium at the target temperature.

The thermal coupling is defined by material properties of the circuit, in particular by properties of the material in which the circuit components and the heater device are embedded. For example, the circuit components and the heater device are embedded in silicon and/or silicon oxide. To enable effective thermal coupling the heater device and the circuit components can be arranged in vicinity to each other. For example, a distance from the heater device to the circuit components is small, in particular less than a distance to the control device. If more than one circuit component is used, the distances from the respective circuit components to the heater device may be equal or approximately equal. Thus, a temperature at the first circuit component may be approximately the same as a temperature at the second circuit component. As long as the target temperature is not reached, the adjusted voltage is different from the second voltage. In this case, the control signal is nonzero, and the heater device generates heat. With increasing temperature, the adjusted voltage approximates the second voltage until, at the target temperature, the second voltage and the adjusted voltage are in equilibrium. Thus, during operation of the voltage reference circuit the temperature stabilizes at the target temperature.

According to at least one embodiment, the voltage reference circuit further comprises an output terminal that is configured to provide a reference voltage as function of the first voltage or the second voltage.

Since the local temperature at the circuit components stabilizes at the target temperature, the first voltage and the second voltage generated by the circuit components also stabilize at a respective target value that can serve as reference voltage. Therefore, the first voltage, the second voltage or any derivative therefrom can be tapped as reference voltage.

According to at least one embodiment, a voltage reference circuit comprises one or more circuit components configured to generate a first voltage and a second voltage, wherein the first voltage has a first temperature coefficient, and the second voltage has a second temperature coefficient that is different from the first temperature coefficient. It further comprises an adjustment circuit configured to generate an adjusted voltage as product of the first voltage and an adjustment factor, wherein the adjusted voltage is designed to equal the second voltage in equilibrium at a target temperature. It further comprises a control device, the control device being configured to provide a control signal based on a difference between the adjusted voltage and the second voltage. It further comprises a heater device, wherein the heater device is configured to generate heat in response to being controlled by the control signal, and wherein the heater device is thermally coupled to the one or more circuit components, thus forming a feedback loop for establishing the equilibrium at the target temperature. It further comprises an output terminal configured to provide a reference voltage as function of the first voltage or the second voltage.

The voltage reference circuit described here is based on the following considerations, among others.

The voltage reference circuit realizes a reference voltage by stabilizing the local temperature to a certain value, for example 100°C. The voltage reference circuit includes a heater device, a feedback loop and circuit components. The circuit components feature a twofold function at once, as they act as thermal transducers and also provide the actual reference signal. The feedback loop controls the local temperature, very much like in an oven. Thus, the voltage reference circuit may be referred to as oven-controlled voltage reference circuit. This is rather opposite to a classic bandgap concept, where a feedback / amplifier generates PTAT (proportional-to-absolute-temperature) and CTAT (complementary-to-absolute-temperature) signals to compensate for temperature variations.

The circuit architecture provides various benefits including the following features: The reference circuit works at very low supply voltage, for example at VDD $\geq$ 0.65V. Further, there is no curvature (vs. temperature) at the output. In addition, also a local temperature reference is generated.

According to at least one embodiment, the first voltage is generated by a first circuit component and the second voltage is generated by a second circuit component.

Thus, the first and the second voltages are generated by distinct circuit components. In general, the first voltage and the second voltage have different temperature coefficients. This can be achieved in various ways, e.g. through selection of different circuit components. However, the first circuit component and the second circuit component can also be identical.

According to at least one embodiment, the voltage reference circuit further comprises a first current source configured to provide a first current for generating the first voltage as voltage drop across the first circuit component, and a second current source configured to provide a second current for generating the second voltage as voltage drop across the second circuit component.

The first current source may be electrically connected between a supply terminal (e.g. VDD) and the first circuit component, and the first circuit component may be driven by the first current. Correspondingly, the second current source may be electrically connected between the supply terminal and the second circuit component, and the second circuit component may be driven by the second current. The first current and the second current may be identical or may be different, as further explained below.

According to at least one embodiment, the first circuit component and the second circuit component are configured to be operated with different current densities.

In the case of realization with identical MOS or bipolar devices as first and second circuit components, it is a preferred practice to achieve different temperature coefficients by different current densities, for good reproducibility. In particular, the same circuit components with different sizing can be used for the first and second circuit components. The sizing can refer to a width-to-length ratio or an area ratio, depending on the type of circuit component. The size ratio of the two circuit components is denoted by N. By implementing a different sizing, the circuit components can be operated with different current densities, provided that the currents for operating the circuit components are the same. It is however also possible that identical circuit components having the same size (N=1) are used, wherein a difference in current densities is achieved by different currents that are applied to the respective circuit components.

According to at least one embodiment, the first voltage and the second voltage are generated by a single circuit component to which a first current and a second current are alternately applied for generating a respective voltage drop.

In other words, it is also possible that a single circuit component, e.g. a single diode or transistor, is used to generate both the first and the second voltage. In this case, the circuit component is alternately switched between two current sources providing different currents to the circuit component. The first voltage and the second voltage are generated depending on which current source is connected to the circuit component. In this way, additional circuit components can be saved, and it can be ensured that the thermal coupling to the heater device is identical during generation of the first and the second voltage.

According to at least one embodiment, the voltage reference circuit further comprises a first storage element configured to temporarily store the first voltage or the adjusted voltage, and/or further comprising a second storage element configured to temporarily store the second voltage.

The first storage element may be electrically coupled to the first input of the control device, and the second storage element may be electrically coupled to the second input of the control device. For example, the storage elements are implemented as capacitors. Especially in case of a single circuit component for generating the first and the second voltage, the storage elements can be used to temporarily store at least one of said voltages while the circuit component generates the other one of said voltages.

According to at least one embodiment, the one or more circuit components are realized as bipolar devices, in particular diodes and/or bipolar junction transistors.

The single circuit component or, respectively, the first circuit component and the second circuit component may be preferably bipolar devices like diodes, NPN or PNP transistors for best precision. In this case the reference voltage may be related to the bandgap voltage. Bipolar transistors may be preferred over diodes as they are available in standard CMOS technology.

According to at least one embodiment, the one or more circuit components are realized as MOS devices.

Instead of bipolars, MOS devices like MOSFETs (metal-oxide semiconductor field-effect transistors) or other components can be used as circuit components for generating the first and the second voltage. Advantageously, the voltage reference circuit can also be realized in semiconductor processes in which no bipolars are available. Thus, the voltage reference circuit can be free of bipolar junction transistors. In this case, the reference voltage may be related to the threshold voltage of the transistors, for example.

According to at least one embodiment, the adjustment circuit is realized as amplifier that is configured to multiply the first voltage by the adjustment factor.

For example, the adjustment factor is less than 1. In this case, the adjusted voltage is a fraction of the first voltage. However, it is also possible that the adjustment factor is equal to or larger than 1, such that the adjusted voltage is a multiple of the first voltage. The adjustment factor can be selected to achieve the equilibrium condition $x \cdot V1 = V2$ at the intended control temperature.

According to at least one embodiment, the adjustment circuit is realized as voltage divider, in particular resistive voltage divider, that is configured to provide a fraction of the first voltage as adjusted voltage.

The voltage divider is arranged parallel to the first circuit component, for example, so that the first voltage also drops across the voltage divider. The voltage divider may be formed by a first resistor and a second resistor that are arranged in series. A circuit node between the first resistor and the second resistor may be electrically connected to an input of the control device, such that the fraction of the first voltage is provided to the control device. The resistance values of the resistors can be adjusted to achieve the above-mentioned equilibrium condition at the target temperature.

According to at least one embodiment, the control device is realized as differential amplifier that is configured to generate the control signal by amplifying the difference between the adjusted voltage and the second voltage. The differential amplifier compares the adjusted voltage with the second voltage and accordingly drives the heater device at its output. The heater device can be operated dynamically by linear amplification of the differential signal.

Alternatively, the control device is realized as comparator that is configured to generate the control signal as square wave signal based on a comparison between the adjusted voltage and the second voltage. The output of the comparator may indicate in binary/digital form which of the two input voltages is higher, yielding a switching behavior of the heater device that is driven by such square wave signal. By using a comparator instead of a linear amplifier as control device, a power loss can be reduced.

According to at least one embodiment, the first temperature coefficient is negative, and the second temperature coefficient is lower than the first temperature coefficient.

For example, a negative temperature coefficient can be achieved by utilizing the voltage drop across semiconductor devices. That the temperature coefficient of the second voltage is lower than that of the first voltage can be realized by a lower current density for generating the second voltage. The second voltage may decrease faster with temperature than the first voltage.

Further, an integrated circuit is provided. The integrated circuit comprises the voltage reference circuit as described above. This means that all features disclosed for the voltage reference circuit are also disclosed for integrated circuit and vice versa.

According to at least one embodiment, the integrated circuit further comprises at least one of an analog-to-digital converter circuit, a digital-to-analog converter circuit, a memory circuit, a sensing circuit, and a driving circuit.

Further, a method for generating a reference voltage is provided. The method for generating a reference voltage can preferably be carried out with the voltage reference circuit described above. This means that all features disclosed for the voltage reference circuit are also disclosed for the method for generating a reference voltage, and vice versa.

According to at least one embodiment, the method comprises generating, by one or more circuit components, a first voltage and a second voltage.

In particular, the first voltage and the second voltage may be generated by different circuit components. However, the voltages can also be generated by a single circuit component being operated with different current densities. For example, the circuit components are bipolar devices like diodes or BJTs.

According to at least one embodiment of the method, the first voltage has a first temperature coefficient, and the second voltage has a second temperature coefficient that is different from the first temperature coefficient.

For example, the first voltage and the second voltage may be voltage drops across the respective circuit component. The different temperature coefficients may be realized by using different current densities for operating the respective circuit components, for example.

According to at least one embodiment, the method further comprises generating an adjusted voltage as product of the first voltage and an adjustment factor, wherein the adjusted voltage is designed to equal the second voltage in equilibrium at a target temperature.

For example, the adjusted voltage is generated by an adjustment circuit, which can be implemented as amplifier or as voltage divider. By means of the adjustment factor, the first voltage is scaled.

According to at least one embodiment, the method further comprises generating a control signal based on a difference between the adjusted voltage and the second voltage.

In particular, the control signal may be generated by a control device, which can be implemented as differential amplifier or comparator, and which receives the adjusted voltage as first input, the second voltage as second input, and which outputs the control signal by amplifying a difference of the adjusted voltage and the second voltage.

According to at least one embodiment, the method further comprises controlling a heater device with the control signal to generate heat. In particular, the control signal may be used to drive the heater device.

According to at least one embodiment, the method further comprises thermally coupling the heater device to the one or more circuit components, thus forming a feedback loop for establishing the equilibrium at the target temperature.

The heater device may be embedded in the voltage reference circuit, such that it is arranged nearby the one or more circuit components. The thermal coupling is defined by the distance between the heater device and the circuit components as well as by material properties.

According to at least one embodiment, the method further comprises providing the reference voltage as function of the first voltage or the second voltage.

For example, the reference voltage is tapped at an output terminal. For example, the first voltage or the second voltage or a derivative therefrom forms the reference voltage.

According to at least one embodiment, a method for generating a reference voltage comprises generating, by one or more circuit components, a first voltage and a second voltage, wherein the first voltage has a first temperature coefficient, and the second voltage has a second temperature coefficient that is different from the first temperature coefficient; the method further comprises generating an adjusted voltage as product of the first voltage and an adjustment factor, wherein the adjusted voltage is designed to equal the second voltage in equilibrium at a target temperature; the method further comprises generating a control signal based on a difference between the adjusted voltage and the second voltage; the method further comprises controlling a heater device with the control signal to generate heat; the method further comprises thermally coupling the heater device to the one or more circuit components, thus forming a feedback loop for establishing the equilibrium at the target temperature; and the method further comprises providing the reference voltage as function of the first voltage or the second voltage.

The disclosed method for generating a reference voltage can achieve the same technical effects and advantages as the voltage reference circuit described above. In particular, a reference voltage is provided by stabilizing the local temperature to a certain value, wherein the feedback loop controls the local temperature. A precise reference voltage as well as a local temperature reference is generated.

The following description of Figures may further illustrate and explain aspects of the voltage reference circuit, the integrated circuit, and the method for generating a reference voltage. Components and parts of the voltage reference circuit that are functionally identical or have an identical effect are denoted by identical reference symbols. Identical or effectively identical components and parts might be described only with respect to the Figures where they occur first. Their description is not necessarily repeated in successive Figures.

Figure 1 shows a voltage reference circuit according to an embodiment.

Figure 2 shows the progression of voltages as a function of temperature, wherein the voltages are generated according to an embodiment.

Figures 3 and 4 shows voltage reference circuits according to Further embodiments.

Figure 5 shows an integrated circuit according to an embodiment.

Figure 6 schematically shows a method for generating a reference voltage.

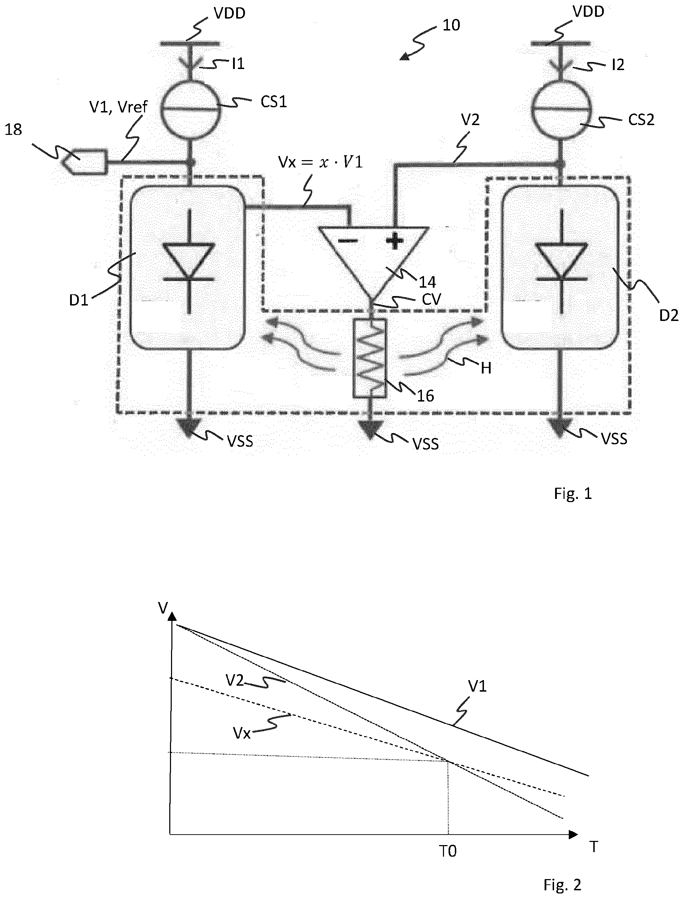

In Figure 1 a voltage reference circuit 10 according to an exemplary embodiment is shown. 1. The voltage reference circuit 10 comprises a first circuit component D1 and a second circuit component D2. The first circuit component D1 is configured to generate a first voltage V1, and the second circuit component D2 is configured to generate a second voltage V2. In the shown example, the first and the second circuit components D1, D2 are realized as bipolar devices, in particular diodes.

As shown in Figure 1, the first circuit component D1 is electrically connected to a first current source CS1 which is configured to provide a first current I1 to operate the first circuit component D1. The second circuit component D2 is electrically connected to a second current source CS2 which is configured to provide a second current I2 to operate the second circuit component D2. The current sources CS1, CS2 and the circuit components D1, D2 are respectively arranged in series between two supply terminals VDD and VSS. The first current I1 and the second current I2 may be different, so that the current densities through the circuit components D1, D2 are different, even if identical circuit components D1, D2 are used. Thus, the circuit components are biased by currents I1, I2 at different current densities, which provide the voltage drops V1 and V2, respectively. By realizing different current densities the first voltage V1 has a first temperature coefficient, and the second voltage V2 has a second temperature coefficient that is different from the first temperature coefficient.

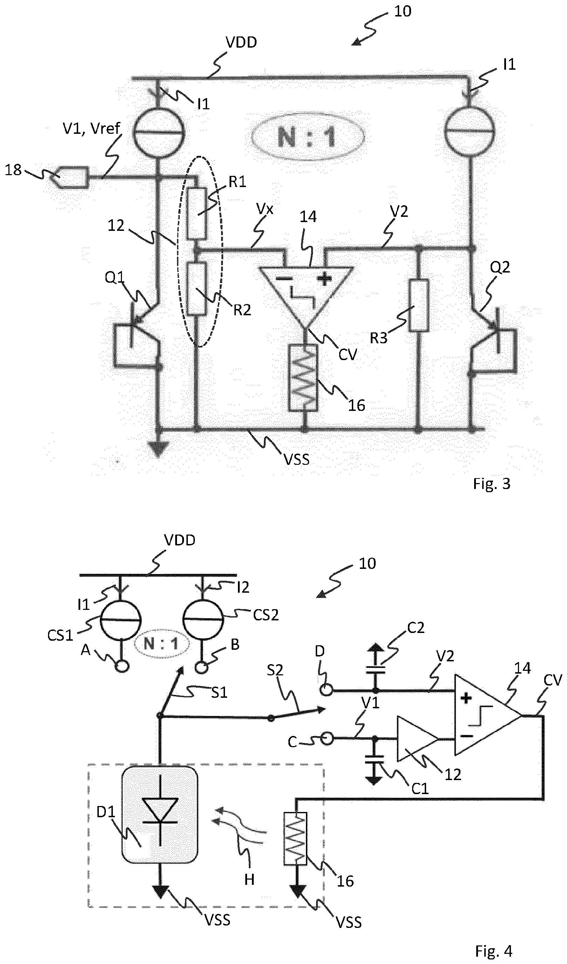

The voltage reference circuit 10 of Figure 1 further comprises an adjustment circuit 12, which however is not shown in detail. Possible implementations of the adjustment circuit 12 are shown in the embodiments of Figures 3 and 4. The adjustment circuit 12 is configured to generate an adjusted voltage Vx as product of the first voltage V1 and an adjustment factor x. The adjusted voltage Vx is designed to equal the second voltage V2 in equilibrium at a target temperature T0, as shown in Figure 2.

The voltage reference circuit 10 further comprises a control device 14, which is, in the embodiment of Figure 1, implemented as differential amplifier. The control device 14 is configured to provide a control signal CV based on a difference between the adjusted voltage Vx and the second voltage V2. In particular, the adjusted voltage Vx is received by an inverted input of the differential amplifier, and the second voltage V2 is received by a non-inverted input of the differential amplifier. The differential amplifier is configured to generate the control signal by amplifying the difference between the adjusted voltage Vx and the second voltage V2 and outputs the result of said amplification as control signal CV.

The voltage reference circuit 10 further comprises a heater device 16, wherein the heater device 16 is configured to generate heat H in response to being controlled by the control signal CV. The heater device 16 is connected between an output of the differential amplifier and the supply terminal VSS. Thus, the heater device 16 is driven by the control signal CV. In the shown example, the heater device 16 is implemented as resistive heater. The heat H generated by the heater device 16 is indicated by arrows.

The heater device 16 is thermally coupled to the circuit components D1, D2. The heater device 16 is placed nearby the circuit components D1, D2, so that the circuit components D1, D2 experience (ideally) the same temperature effect. The heat H generated by the heater device 16 affects the circuit components D1, D2, so that the voltages V1, V2 generated by the circuit components D1, D2 are set as a function of the temperature reached at the circuit components D1, D2. In case of negative temperature coefficients, a rising temperature results in lower voltages V1, V2, but also in a decrease of the difference V2-Vx.

Thus, a feedback loop for establishing the equilibrium at the target temperature is formed. In other words, the electrothermal coupling between silicon/ device layers forms a negative feedback loop, which eventually establishes identical input levels at the differential amplifier. A micro-oven is formed essentially by the heater device 16 and the circuit components D1, D2 (as indicated by a dashed box), but may cover the other components of the circuit 10 as well.

The voltage reference circuit 10 further comprises an output terminal 18. The output terminal 18 provides a reference voltage Vref, which in this case is the first voltage V1. However, any derivative of the first voltage V1, e.g. the second voltage V2, can be used as reference voltage as well.

In Figure 2 the progression of voltages V as a function of temperature T is shown. The first voltage V1 (solid line) linearly decreases with temperature and thus has a negative temperature coefficient. The second voltage V2 (dotted line) decreases faster with temperature T than the first voltage V1 and thus has a lower temperature coefficient than the first voltage V1. The adjusted voltage Vx (dashed line) is the first voltage V1 multiplied by an adjustment factor x, which is designed such that the adjusted voltage Vx equals the second voltage V2 at the target temperature T0. If different current densities are used to achieve different temperature coefficients, the voltages can be modelled as follows:

$$(1)\ V_{1,2} = V_{G0} + tc_{1,2} \cdot T$$

$$(2)\ V1 - V2 = V_T \cdot \ln(N)\ ,$$

where T is the temperature (°K), $tc_{1,2}$ is the respective temperature coefficient of the first voltage V1 and the second voltage V2, respectively, and $V_{G0}$ is a physical constant close to the silicon bandgap. $V_T$ is the thermal voltage (= $k_B T/q$) and N is the ratio of current densities between the first circuit component and the second circuit component.

By combining the equilibrium condition V2=x·V1 with relations (1) and (2), the reference voltage is defined as:

$$(3)\ Vref = \frac{V_{G0}}{1 - \frac{q \cdot tc_1 \cdot (1-x)}{k_B \cdot \ln(N)}} \cdot$$

Hence, the output is a precise reference defined essentially by physical constants and scaling factors. Only parameter $tc_1$ has some dependency on manufacturing spread. Notably, the system works autonomously without any external (reference) inputs. The temperature established in the micro-oven is:

$$(4)\ T = \frac{V_{G0}}{\frac{k_B \cdot \ln(N)}{q \cdot (1-x)} - tc_1} \cdot$$

Since there is no cooling means, the concept establishes a temperature higher than ambient conditions. However, the advantage of this operation is a lower voltage drop, because at e.g. T=100°C the first voltage V1 is about 0.6V for diodes or BJTs. This allows very low supply voltages below 0.7V.

In Figure 3 a further embodiment of the voltage reference circuit 10 is shown. Individual features or combinations of features of the voltage reference circuit 10 shown in Figure 3 can also be implemented in the voltage reference circuit 10 shown in Figure 1, and vice versa.

The voltage reference circuit 10 according to Figure 3 is different from the voltage reference circuit 10 according to Figure 1 in that the circuit components Q1, Q2 for generating the first voltage V1 and the second voltage V2 are realized by bipolar junction transistors, in this case PNP transistors.

Further, the current sources provide identical currents I1 to the respective transistors, wherein a ratio N:1 of current densities is realized by area ratios of the transistors, for example. Thus, the N-ratio in current density can be implemented by different sizing of Q1/Q2 and identical currents I1, or vice versa, or any combination thereof.

Further, a comparator is used as control device 14, wherein the comparator is configured to generate the control signal CV as square wave signal based on a comparison between the adjusted voltage Vx and the second voltage V2.

As shown in Figure 3, the adjustment circuit 12 can be implemented as voltage divider, in particular resistive voltage divider. However, other voltage dividers, in particular capacitive voltage dividers, are also possible. The voltage divider is arranged in parallel to the first circuit component Q1. The voltage divider comprises a first resistor R1 and a second resistor R2 that are arranged in series. A circuit node between the first resistor R1 and the second resistor R2 is electrically connected to the inverted input terminal of the comparator, such that a fraction of the first voltage V1 is provided at this input terminal.

A third resistor R3 is arranged parallel to the second circuit component Q2. For example, the third resistor R3 has the same resistance value as the sum of the resistance values of the first resistor R1 and the second resistor R2, i.e., R3=R1+R2. The third resistor R3 is useful for symmetry, to ensure a constant N-ratio.

The voltage divider may be included in the above-mentioned micro-oven. That is, the heat H generated by the heater device 16 may affect the resistors R1, R2, R3 as well. In this way, advantageously, the temperature at the resistors R1, R2, and R3 is kept constant.

In Figure 4 a further embodiment of the voltage reference circuit 10 is shown. Individual features or combinations of features of the voltage reference circuit 10 shown in Figure 4 can also be implemented in the voltage reference circuits 10 shown in Figure 1 or 3, and vice versa.

In the voltage reference circuit 10 of Figure 4, the first voltage V1 and the second voltage V2 are generated by a single circuit component D1, in this case a diode. A first current I1 and a second current I2 are provided by respective current sources CS1, CS2 and are alternately applied to circuit component D1 for generating a respective voltage drop V1, V2. By applying different currents I1, I2 the current densities can have a ratio of N:1. The circuit component D1 is electrically connected to the respective current sources CS1, CS2 by means of a first switch S1 that is controlled by alternating phases. For example, in a first phase the switch S1 is electrically connected to a node A of the first current source CS1, while in a second phase the switch S1 is electrically connected to a node B of the second current source CS2.

The first voltage V1 and the second voltage V2 are temporarily stored on respective storage elements C1, C2. The storage elements C1, C2 are implemented as capacitors. A second switch S2, that is synchronized with the first switch S1, connects the circuit component D1 to a terminal C of the first capacitor C1 in the first phase, and to a terminal D of the second capacitor C2 in the second phase.

In this embodiment, the adjustment circuit 12 is implemented as amplifier which multiplies the first voltage V1 with the adjustment factor x. It is also possible that the amplifier is arranged upstream of the first capacitor C1, such that the adjusted voltage Vx is stored on the first capacitor instead of the first voltage V1.

As in the embodiment of Figure 3, the control circuit 14 is implemented as comparator that is configured to generate the control signal CV as square wave signal based on a comparison between the adjusted voltage Vx and the second voltage V2 to drive the heater device 16.

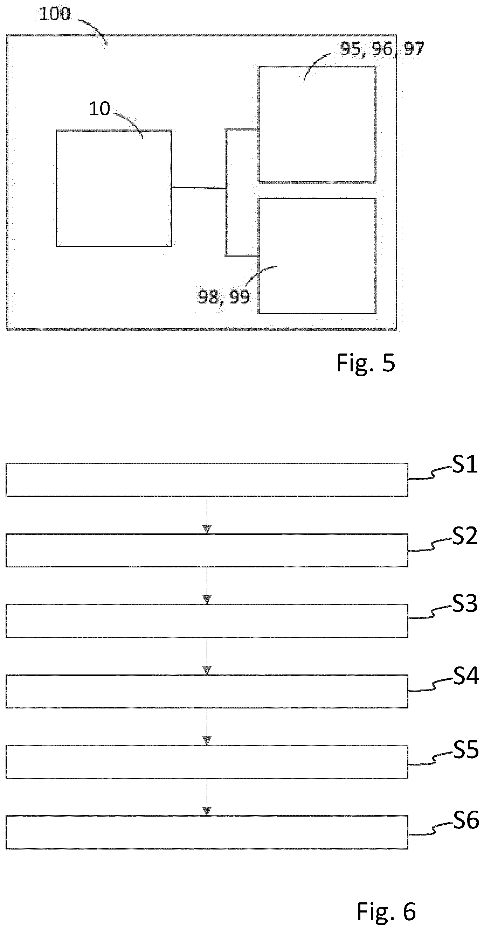

In Figure 5 an exemplary integrated circuit 100 is shown. The integrated circuit 100 comprises the voltage reference circuit 10 according to one of the above-described embodiments. The integrated circuit 100 may further comprise at least one of an analog-to-digital converter circuit 95, a digital-to-analog converter circuit 96, a memory circuit 97, a sensing circuit 98, and a driving circuit 99. In the shown example the integrated circuit 100 comprises two of such components. However, the integrated circuit 100 can also comprise only one or more additional circuit components. The additional circuit components 95-99 are electrically connected to the voltage reference circuit 10. This can mean that the voltage reference circuit 10 provides a reference voltage Vref to each of the additional circuit components 95-99.

With Figure 7 a method for generating a reference voltage Vref is shown schematically. The method comprises the following steps that are not necessarily carried out in this order but can be carried out in this order.

In a first step S1, a first voltage V1 and a second voltage V2 are generated by one or more circuit components. The first voltage V1 has a first temperature coefficient, and the second voltage V2 has a second temperature coefficient that is different from the first temperature coefficient

In a second step S2, an adjusted voltage Vx is generated as product of the first voltage V1 and an adjustment factor x, wherein the adjusted voltage Vx is designed to equal the second voltage V2 in equilibrium at a target temperature T0.

In a third step S3, a control signal CV is generated based on a difference between the adjusted voltage Vx and the second voltage V2.

In a fourth step S4, heat H is generated by a heater device that is controlled with the control signal. In particular, the heater device is driven by the control signal.

In a fifth step S5, the heater device is thermally coupled to the one or more circuit components. Thus, the heat affects the circuit components. Thereby, a feedback loop for establishing the equilibrium at the target temperature is formed.

In a sixth step S6, the reference voltage Vref is provided as function of the first voltage V1 or the second voltage V2.

The embodiments of the voltage reference circuit 10, the integrated circuit 100 and the method for generating a reference voltage disclosed herein have been discussed for the purpose of familiarizing the reader with novel aspects of the idea. Although preferred embodiments have been shown and described, many changes, modifications, equivalents and substitutions of the disclosed concepts may be made by one having skill in the art without unnecessarily departing from the scope of the claims.

It will be appreciated that the disclosure is not limited to the disclosed embodiments and to what has been particularly shown and described hereinabove. Rather, features recited in separate dependent claims or in the description may advantageously be combined. Furthermore, the scope of the disclosure includes those variations and modifications, which will be apparent to those skilled in the art and fall within the scope of the appended claims.

The term "comprising", insofar it was used in the claims or in the description, does not exclude other elements or steps of a corresponding feature or procedure. In case that the terms "a" or "an" were used in conjunction with features, they do not exclude a plurality of such features. Moreover, any reference signs in the claims should not be construed as limiting the scope.

Reference numerals

| | |
|---|---|
| 10 | voltage reference circuit |
| 12 | adjustment circuit |
| 14 | control device |
| 16 | heater device |
| 18 | output terminal |
| 95 | analog-to-digital converter circuit |
| 96 | digital-to-analog converter circuit |
| 97 | memory circuit |
| 98 | sensing circuit |
| 99 | driving circuit |
| 100 | integrated circuit |
| A,B,C,D | terminal |
| C1,C2 | storage element |
| CS1,CS2 | current source |
| CV | control signal |
| D1,D2 | circuit component, diode |
| H | heat |
| I1,I2 | current |
| Q1,Q2 | circuit component, transistor |
| R1,R2,R3 | resistor |
| S1,S2 | switch |
| T0 | target temperature |
| V1 | first voltage |
| V2 | second voltage |
| Vx | adjusted voltage |

**Claims**

1. A voltage reference circuit (10), comprising:

   - one or more circuit components (D1, D2, Q1, Q2) configured to generate a first voltage (V1) and a second voltage (V2), wherein the first voltage (V1) has a first temperature coefficient, and the second voltage (V2) has a second temperature coefficient that is different from the first temperature coefficient;
   - an adjustment circuit (12) configured to generate an adjusted voltage (Vx) as product of the first voltage (V1) and an adjustment factor (x), wherein the adjusted voltage (Vx) is designed to equal the second voltage (V2) in equilibrium at a target temperature (T0);
   - a control device (14), the control device (14) being configured to provide a control signal (CV) based on a difference between the adjusted voltage (Vx) and the second voltage (V2);
   - a heater device (16), wherein the heater device (16) is configured to generate heat (H) in response to being controlled by the control signal (CV), and wherein the heater device (16) is thermally coupled to the one or more circuit components (D1, D2, Q1, Q2), thus forming a feedback loop for establishing the equilibrium at the target temperature (T0); and
   - an output terminal (18) configured to provide a reference voltage (Vref) as function of the first voltage (V1) or the second voltage (V2).

2. The voltage reference circuit (10) according to claim 1, wherein the first voltage (V1) is generated by a first circuit component (D1, Q1) and the second voltage (V2) is generated by a second circuit component (D2, Q2).

3. The voltage reference circuit (10) according to claim 2, further comprising a first current source (CS1) configured to provide a first current for generating the first voltage (V1) as voltage drop across the first circuit component (D1, Q1), and a second current source (CS2) configured to provide a second current for generating the second voltage (V2) as voltage drop across the second circuit component (D2, Q2).

4. The voltage reference circuit (10) according to claim 2 or 3, wherein the first circuit component (D1, Q1) and the second circuit component (D2, Q2) are configured to be operated with different current densities.

5. The voltage reference circuit (10) according to claim 1, wherein the first voltage (V1) and the second voltage (V2) are generated by a single circuit component (D1, Q1) to which a first current (I1) and a second current (I2) are alternately applied for generating a respective voltage drop.

6. The voltage reference circuit (10) according to claim 5, further comprising a first storage element (C1) configured to temporarily store the first voltage (V1) or the adjusted voltage (Vx), and/or further comprising a second storage element (C2) configured to temporarily store the second voltage (V2).

7. The voltage reference circuit (10) according to one of claims 1 to 6, wherein the one or more circuit components (D1, D2, Q1, Q2) are realized as bipolar devices, in particular diodes and/or bipolar junction transistors.

8. The voltage reference circuit (10) according to one of claims 1 to 6, wherein the one or more circuit components (D1, D2, Q1, Q2) are realized as MOS devices.

9. The voltage reference circuit (10) according to one of claims 1 to 8, wherein the adjustment circuit (12) is realized as amplifier that is configured to multiply the first voltage (V1) by the adjustment factor (x).

10. The voltage reference circuit (10) according to one of claims 1 to 8, wherein the adjustment circuit (12) is realized as voltage divider, in particular resistive voltage divider, that is configured to provide a fraction of the first voltage (V1) as adjusted voltage (Vx).

11. The voltage reference circuit (10) according to one of claim 1 to 10, wherein the control device (14) is realized as differential amplifier that is configured to generate the control signal (CV) by amplifying the difference between the adjusted voltage (Vx) and the second voltage (V2).

12. The voltage reference circuit (10) according to one of claims 1 to 10, wherein the control device (14) is realized as comparator that is configured to generate the control signal (CV) as square wave signal based on a comparison between the adjusted voltage (Vx) and the second voltage (V2).

13. The voltage reference circuit (10) according to one of claim 1 to 12, wherein the first temperature coefficient is negative, and wherein the second temperature coefficient is lower than the first temperature coefficient.

14. An integrated circuit (100), the integrated circuit (100) comprising the voltage reference circuit (10) according to one of the preceding claims, wherein the integrated circuit (100) further comprises at least one of an analog-to-digital converter circuit (95), a digital-to-analog converter circuit (96), a memory circuit (97), a sensing circuit (98), and a driving circuit (99).

15. A method for generating a reference voltage (Vref), the method comprising:

- generating (S1), by one or more circuit components (D1, D2, Q1, Q2), a first voltage (V1) and a second voltage (V2), wherein the first voltage (V1) has a first temperature coefficient, and the second voltage (V2) has a second temperature coefficient that is different from the first temperature coefficient;
- generating (S2) an adjusted voltage (Vx) as product of the first voltage (V1) and an adjustment factor (x), wherein the adjusted voltage (Vx) is designed to equal the second voltage (V2) in equilibrium at a target temperature (T0);
- generating (S3) a control signal (CV) based on a difference between the adjusted voltage (Vx) and the second voltage (V2);
- controlling (S4) a heater device (16) with the control signal (CV) to generate heat (H);
- thermally coupling (S5) the heater device (16) to the one or more circuit components (D1, D2, Q1, Q2), thus forming a feedback loop for establishing the equilibrium at the target temperature (T0); and

- providing (S6) the reference voltage (Vref) as function of the first voltage (V1) or the second voltage (V2).

Fig. 1

Fig. 2

Fig. 3

Fig. 4

Fig. 5

Fig. 6

## EUROPEAN SEARCH REPORT

Application Number

**EP 24 19 2304**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ni.com: "Precision Voltage Reference Testing using the NI PXIe-4081 DMM - NI", , 18 April 2023 (2023-04-18), XP093239875, Retrieved from the Internet: URL:https://web.archive.org/web/2024040320 0733/https://www.ni.com/en/shop/electronic -test-instrumentation/digital-multimeters/ what-are-digital-multimeters/precision-vol tage-reference-testing-using-the-ni-pxie-4 081-dmm.html#section-1341323645 * Part II: Temperature Stability; page 2 - page 3 * | 1-15 | INV. G05D23/19 G05F3/30 |
| A | Linear Technology: "LM199/LM399 LM199A/LM399A", , 12 May 2014 (2014-05-12), XP093240577, Retrieved from the Internet: URL:https://www.analog.com/media/en/techni cal-documentation/data-sheets/199399fc.pdf * page 1 * * page 6 * | 1-15 | |
| | | | TECHNICAL FIELDS SEARCHED (IPC) |
| | | | G05D G05F |

The present search report has been drawn up for all claims

| Place of search | Date of completion of the search | Examiner |
|---|---|---|
| The Hague | 17 January 2025 | Benedetti, Gabriele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)